(19) Europäisches Patentamt
European Patent Office
Office européen des brevets

(11) **EP 1 975 656 B1**

(12) **EUROPEAN PATENT SPECIFICATION**

(45) Date of publication and mention
of the grant of the patent:
**08.06.2011 Bulletin 2011/23**

(51) Int Cl.:
**G02B 6/122** *(2006.01)*    **H01Q 15/00** *(2006.01)*
**B01J 13/00** *(2006.01)*

(21) Application number: **07006702.0**

(22) Date of filing: **30.03.2007**

(54) **Metamaterials and resonant materials based on liquid crystal dispersions of colloidal particles and nanoparticles**

Metamaterialien und Resonanzmaterialien auf der Basis von Flüssigkristalldispersionen von kolloidalen Teilchen und Nanoteilchen

Métamatériaux et matériaux résonants à base de dispersions cristallines liquides et particules colloïdales et nanoparticules

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**01.10.2008 Bulletin 2008/40**

(73) Proprietors:
• **INSTITUT JOZEF STEFAN**
**1000 Ljubljana (SI)**
• **University of Ljubljana**
**1000 Ljubljana (SI)**

(72) Inventors:
• **Musevic, Igor**
**1275 Smartno pri Litiji (SI)**
• **Skarabot, Miha**
**1351 Brezovica pri Ljubljani (SI)**
• **Zumer, Slobodan**
**1000 Ljubljana (SI)**
• **Ravnik, Miha**
**1000 Ljubljana (SI)**

(74) Representative: **Gagel, Roland**
**Patentanwalt Dr. Roland Gagel**
**Landsberger Strasse 480a**
**81241 München (DE)**

(56) References cited:
• **MUSEVIC I ET AL: "Two-dimensional nematic colloidal crystals self-assembled by topological defects" SCIENCE AMERICAN ASSOC. ADV. SCI USA, vol. 313, no. 5789, 18 August 2006 (2006-08-18), pages 954-958, XP002448941 ISSN: 0036-8075**
• **KHOO I C ET AL: "Nanosphere dispersed liquid crystals for tunable negative-zero-positive index of refraction in the optical and terahertz regimes" OPTICS LETTERS OPT. SOC. AMERICA USA, vol. 31, no. 17, 1 September 2006 (2006-09-01), pages 2592-2594, XP002448942 ISSN: 0146-9592**
• **YANNOPAPAS V: "Artificial magnetism and negative refractive index in three-dimensional metamaterials of spherical particles at near-infrared and visible frequencies" APPLIED PHYSICS A (MATERIALS SCIENCE PROCESSING) SPRINGER-VERLAG GERMANY, vol. A87, no. 2, May 2007 (2007-05), pages 259-264, XP002448943 ISSN: 0947-8396**

## Description

TECHNICAL FIELD OF THE INVENTION

The present invention relates to metamaterials and resonant materials and to a method of producing such materials.

Metamaterials are materials with negative index of refraction. The first hypothesis on artificial materials displaying negative index of refraction was formulated by Victor Veselago in 1967 (Sov. Phys. Usp., 10, 509(1968)). Veselago introduced the term "left-handed materials" for these hypothetical materials, because the vectors E, H and k, describing the propagation of electromagnetic waves, form a left-handed triplet instead of right-handed materials, as in ordinary materials. In metamaterials, the dielectric permitivity $\varepsilon$ and the magnetic permitivity $\mu$ are both simultaneously negative for the electromagnetic wave with given frequency, which results in the negative index of refraction accompanied by a variety of interesting physical phenomena. In metamaterials the phase velocity, describing the velocity and direction of propagation of wavefronts, and the Poynting vector, describing the flow of energy, are antiparallel. Such a synthetic material or "meta-material" allows for a production of "superlenses", where the image resolution is not limited by diffraction effects, as shown in the work of J. B. Pendry, Phys. Rev. Lett. 85, 3966(2000). Metamaterials do not exist in nature, although many materials are known, where $\varepsilon$ and $\mu$ are separately negative in the vicinity of electronic (for $\varepsilon$) and magnetic (for $\mu$) resonances. The reason is that electronic resonances, which appear in metals (such as silver, alumina), are located at very large frequencies, whereas magnetic resonances, which appear for example in ferromagnetic materials, appear in the infrared region.

A technical problem is therefore the fabrication of artificial matter, where the dielectric and magnetic resonances appear in the same region of the frequency spectra, and the negative index of refraction is the result of overlap of both resonances. In addition, the size of the resonating objects or resonating circuits is smaller and typically much smaller than the wavelength of the electromagnetic wave in question.

STATE OF THE ART

The technical problem of producing artificial materials with negative index of refraction was so far solved using discrete inductance-capacitance resonator circuits, as are known from electronic design. Such resonators were described in the literature to operate as metamaterials in the microwave, terahertz, infrared and visible range of the electromagnetic spectrum. The materials are based on the combination of many inductive resonant parts, usually produced in a form of conductive rings, which are split in one point, thus forming "split-ring resonators" (SRR), and a system of short conductors, that form dielectric resonance circuits. Both systems are distributed in the same space, thus forming a continuum with metamaterial properties. The first known technical solution for the production of metamaterial, or magnetic resonant material, for the microwave frequency spectrum, was presented in the paper by J. B. Pendry, A. J. Holden, D. J. Robbins, W. J. Stewart, IEEE Trans. Microwave Theory Tech. 47, 2075(1999). The resonant material was formed of a system of conductive rings, which had a negative magnetic response in the vicinity of the resonance in the microwave region. This was followed by composite synthetic materials, consisting of a number of "horse-shoe" resonators, intermixed with a system of small conductive rods (D. R. Smith, W. J. Padilla, D. C. Vier, S. C. Nemat-Nasser, S. Schultz, Phys. Rev. Lett. 84, 4184(2000), R. A. Shelby, D. R. Smith, S. Schultz, Science 292, 77(2001)), that showed negative $\varepsilon$ and $\mu$ in the same frequency range. The split ring resonators and rods were fabricated using optical photolithography of conductive layers on dielectric substrates. These and related discoveries led to fast expansion in the field of metamaterials with negative refractive index materials. A survey of the state of the art in the field can be found in the paper of S. A. Ramakrishna, Rep. Prog. Phys. 68, 449(2005). Using optical lithography, horse-shoe SRR were fabricated with dimensions of only 300 nm in 2004. The magnetic resonance was located at 100 THz, which is described in the paper of S. Linden, Ch. Enkrich, M. Wegener, J. Zhou, Th. Koschny, C. M. Soukoulis, Science 306, 1351(2004). In his paper in Science 306, 1353 (2004), J. B. Pendry has shown an efficient alternative of producing metamaterials. He proposed a "Swiss-role" material, where the metallic conductive sheets are wound around a cylinder, which is stretched along its geometrical axis. In 2006, G. Dolling, Ch. Enkrich, M. Wegener, C. M. Soukoulis, S. Linden, have shown in their paper in Science 312, 892(2006), that using femtosecond laser pulse spectroscopy it is possible to verify simultaneous negative phase and group velocity of infrared light in metamaterial, formed of lithographically patterned gold layers on $Mg_2F$ insulating layers.

In US2004066251 "Planar metamaterials for control of electromagnetic wave guidance and radiation", G. Eleftheriades and K.Balman describe different structures of a planar metamaterial for microwave, GHz region, that are formed by discrete capacitors and inductive elements, that are connected into regular patterns on dielectric substrate. The patent does not address the method of producing such structures, but it does address microwave optics based on metamaterials for that particular frequency region. A similar technical solution of producing metamaterials is found in WO2006015478 "Negative-refraction metamaterials using continuous metallic grids over ground for controlling and guiding electromagnetic radiation", by G. V. Eleftheriadesa. In their patent EP1671164 "Fabrication of semiconductor metamaterials", P. Sazio, J. Anthony, J. V. Badding, D. W. Hewak address the problem of application of thin semiconducting layers to the inner surface of channels in microstructured materials. These are made in a form of optical fibres, where light is captured in an air gap, located in between a braid of dielectric fibres, forming a geometrically regular pattern, called "the photonic structure". Using these structures, the light of particular frequency is forbidden to transverse the "photonic structure" and is therefore captured inside the air gap. The losses for the transport of light are in this case much lower compared to traditional fibres, where the light passes through glass. The authors claim patent on the method of application of a semiconducting material on the inner surfaces of fibres forming the photonic structure, which is based on surface adsorption from supercritical liquid, that is transported under large pressure along the fibres. In their patent WO2006023195 "Metamaterials", D. R. Smith, D. Schurig, A. F. Starr, and J. J. Mock describe the structure of a metamaterial, formed by multiple resonant elements, spatially distributed in a substrate with a dielectric constant that changes in a certain direction (index gradient metamaterial). The authors describe the fabrication of resonance elements, which are of macroscopic size (millimetre) and are produced from metal pieces using standard fabrication tools. The material is potentially interesting for millimetre EM waves. In their patent WO 03087904 "Metamaterials employing photonic crystal", M. L. Povinelli, G. S. Johnson, J. D. Joannopoulos describe periodic two-dimensional photonic structures with intentionally added defects. When the frequency of the EM field is within the forbidden frequency range of the photonic lattice, the field is localized at defect sites. The patent describes various structures of photonic crystals with defects, but it does not address the method of crystal fabrication.

In conclusion, the main methods for the production of metamaterials are classical methods of modem microelectronics, which includes optical lithography. In this case, metamaterials for the infrared and terahertz range can be produced. However, the limitations of classical lithography become important when the dimensions of the resonators are below 1 micrometer, where electronic lithography should be used. Moreover, step-by-step optical lithography has to be used in order to obtain bulk metamaterial. The basic limitation of electronic lithography is its low speed, as it takes several hours to pattern surfaces of the size of $mm^2$. The sizes of the resonators for the application in the microwave region are typically of the order of mm, therefore standard fabrication tools can be used.

I. Musevic et al., Two-Dimensional Nematic Colloidal Crystals Self-Assembled by Topological Defects, Science, vol. 313. pages 954 to 958. 18 August 2006. describe two-dimensional nematic colloidal crystals self-assembled by topological defects. In this publication it is shown that colloidal particles, confined to a few micrometer thick layer of a nematic liquid crystal, form two-dimensional crystal structures that are bound by topological defects. The publication does not deal with the generation of metamaterials and does not mention or address the phenomena of attraction of nanoparticles into defects.

An object of present invention is to provide new metamaterials and/or resonant materials having resonators with sizes from a millimetre down to the micrometer and sub-micrometer range, and a method of fabricating the same.

SUMMARY OF THE INVENTION:

The object is achieved with the metamaterial and/or resonant material according to claim 1 and with the method according to claim 12. Advantageous embodiments of the material and method are subject matter of the dependent claims or are described in the subsequent portions of the description.

The proposed metamaterials and/or resonant materials are based on dispersions of colloidal particles and nanoparticles in liquid crystals. The invention is based on the principle of phase segregation of nanoparticles in the vicinity of topological defects, which are created in the liquid crystal by colloidal inclusions. In other words, the method of manufacturing makes use of self-assembly or self-forming of nanoparticles in the defect lines of a liquid crystal, that are formed around colloidal inclusions or other inclusions in liquid crystals at appropriate conditions. The starting point of the invention is a liquid crystalline colloidal dispersion, to which nanoparticles are added. Due to the surface anchoring of liquid crystal molecules at the surfaces of colloidal particles and nanoparticles, point and/or line defects are formed around colloidal particles, where the degree of liquid crystalline order inside the defects is lower compared to bulk. Line defects can surround one colloidal particle or may entangle several particles. The added nanoparticles segregate in the core of defects, which is an effect of their size. In the case where added nanoparticles are electrically conductive, resonant circuits are formed for the external electromagnetic radiation, propagating through the dispersion. These resonant circuits can be localized around a single colloidal particle, or can entangle several colloidal particles. Using proper geometry and size of the resonant circuits the dielectric, magnetic, or combined resonant response of the dispersion at a given frequency or a frequency band can be adjusted.

The geometry and size of the resonant circuits, which are formed by the arrangement of the nanoparticles trapped in the point and/or line defects, can be controlled for example via the size, amount and/or surface-anchoring properties of the colloidal particles and/or nanoparticles. The term "nanoparticles" means small particles which have sizes/diameters between 1 nm and less than 1 $\mu$m. Preferably nanoparticles with sizes between 5 nm and 200 nm are used. The colloidal particles preferably have sizes between 1 $\mu$m and 100 $\mu$m.

The basic physical mechanism that is responsible for self-forming of metamaterials is as follows. A liquid crystal is characterized by its orientational order, which describes the degree of order of the long molecular axis of liquid crystalline materials. In case other types of molecules than rod-like are used, the orientational order is described by another appropriate variable. In liquid crystal, the order is described by a tensorial field, which is similar to the tensor field, describing magnetic and dielectric properties of a liquid crystal. In equilibrium, the degree of order of a liquid crystal is a local quantity and may vary from point to point. Because of their small size, nanoparticles are a source of local disorder, when incorporated into the liquid crystal host. At the same time, the inclusion of nanoparticles increases the total free energy of the system. This characteristic of nanoparticles is a consequence of the interaction of their surfaces with the molecules of the liquid crystal, and is well understood in the physics of liquid crystals. At the same time, the degree of order of a liquid crystal is always decreased in the vicinity and in the core of topological (structural) defects in liquid crystals. These defects appear in a form of points or lines in the nematic liquid crystal and also increase the free energy of the system, which is also well known from the physics of liquid crystals. As a consequence, when the nanoparticles are in the vicinity of a topological defect in a liquid crystal, an entropic force must be generated, that drives the nanoparticles into the deformed region. In this way, the total free energy of nanoparticles and topological defects is always decreased. As nanoparticles are subject to Brownian motion, that always exists due to random thermal motion in a liquid, they will be transported from the region of higher degree of order into the region of a liquid crystal with a lower degree of order, because this will reduce the total free energy. The corresponding entropic force is named "structural force", and the process of nanoparticle transport is named segregation of nanoparticles at topological defects. The structural force on nanoparticles driving them into the region of reduced order is used to produce metamaterials based on liquid crystal colloidal dispersions with prescribed shape of building blocks, i.e. the resonators or resonator circuits that are responsible for the formation of a metamaterial. The shape and the structure of the basic building blocks are chosen by appropriate selection of spatial distribution of the topological defect lines or point defects in the liquid crystal.

BRIEF DESCRIPTION OF THE DRAWINGS

The invention is described in the following by way of examples in connection with the accompanying figures without limiting the scope of the invention as defined by the claims. The figures show:

Figure 1. Structure of a composite material, which is formed by colloidal particles, immersed in a nematic liquid crystal. Each colloidal particle is encircled by a defect line, also called Saturn ring, which is filled-up with nanoparticles.

Figure 2. Microscope photograph of a 19 $\mu$m colloidal silica microsphere in the nematic liquid crystal, encircled with a defect line in a form of a Saturn ring. The defect line emerges as soon as the colloidal particle is included into the nematic liquid crystal and is a consequence of the conservation of the topological charge and basic laws of topology.

Figure 3. Schematic view of the director field, describing the orientation of the nematic liquid crystal around the colloidal particle with the Saturn ring. The ring is indicated as a region, where the orientational order of a liquid crystal is reduced with respect to the surroundings. Nanoparticles are filling-up the region of the Saturn ring.

Figure 4. Segregation of nanoparticles into the point defect in the vicinity of a colloidal particle in the nematic liquid crystal. The structure of a colloid and the point defect is called "dipole", reminiscent of lines of forces in the vicinity of an electric dipole in an external electric field.

Figure 5. Segregation of nanoparticles in topological defects, which are delocalized and entangle a group of colloidal particles. These kind of topological lines are called entangled defect lines.

DETAILED DESCRIPTION OF EMBODIMENTS

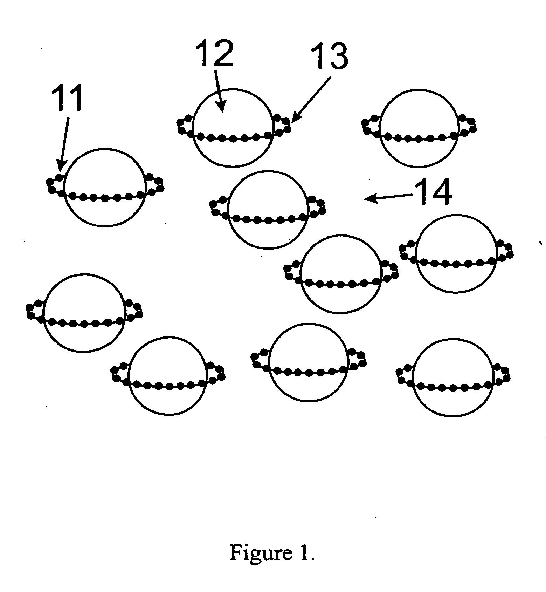

Figure 1 presents a composite material, formed of colloidal particles 12, immersed in a nematic liquid crystal 14. Each colloidal particle is encircled by a defect line 13 (also called Saturn ring), which is filled-up with nanoparticles 11. The surface of colloidal particles is chemically treated so as to induce good alignment of nematic liquid crystal molecules at the surface. Colloidal particles may be of an arbitrary material, including glass, metal, dielectric solid, magnetic solid, ceramics, polymer, to which a procedure of the chemical treatment of colloidal surfaces is adapted, the methods being well known from the technology of production of liquid crystal display devices. For example, glass or silica microspheres of a diameter from 1 micrometer to 100 micrometers, uniform in size, can be surface functionalized using DMOAP surfactant. Such a surfactant monolayer is chemically attached to the glass or silica surface and causes perpendicular alignment of most known liquid crystalline nematic materials on the functionalized surface. The energy of orientational anchoring is of the order of $10^{-3}$ J/m$^2$. An expert in the field will recognize that similar surface anchoring could be achieved using other surfactant molecules and methods of application, which is a known praxis in the field of liquid crystals. The microspheres are put in a thin layer of the nematic liquid crystal, which is homogeneously aligned in between two confining flat surfaces. In case when the thickness of the liquid crystal layer is from 1 to 1.5 of the diameter of microspheres, a thin defect line in a form of a Saturn ring will appear around each colloidal particle. A similar effect is obtained in thicker layers of the nematic liquid crystal, when the surface anchoring energy of colloidal particles is lowered. Methods of lowering the surface anchoring energies are known from the literature on LCD devices. An expert in the field will also recognize that similar effects could be achieved on bodies of other shapes, with their dimensions being larger than 100 micrometers and also smaller than 1 micrometer.

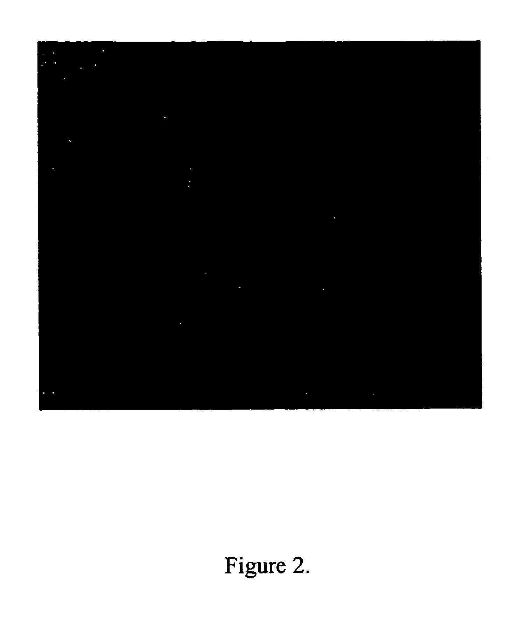

Figure 2 presents a microphotograph of a silica colloidal particle of 19 micrometer diameter, immersed in a 22 micrometer thin layer of a nematic liquid crystal 4'-n-pentyl 4-cyanobiphenyl (5CB). The photo shows a defect line encircling the particle. The position of a defect line, i.e. its separation from the colloidal surface, depends on the strength of surface anchoring of the liquid crystal, diameter of the colloidal particle and the thickness of the nematic liquid crystal. The particle in Figure 2 has been chemically treated using 1% of water solution of N,N-dimethyl-N-octadecyl-3-aminopropyl trimethoxysilyl chloride (DMOAP), followed by flushing with pure alcohol and final drying. The dry colloidal particles are immersed in a liquid crystal, heated into the isotropic phase and stirred using ultrasound for several minutes. After cooling the dispersion is ready for use. Using this method of surface preparation, a monolayer of DMOAP is formed at a glass or silica surface, which causes perpendicular alignment of nematic liquid crystals on the surface of colloidal particles. The surface energy is high, i.e. of the order of $1mJ/m^2$. In the case when the thickness of the nematic liquid crystal layer is larger than 1.5 of particle diameter, a topological defect in a form of an isolated point is formed. In case the thickness of the nematic layers is between 1 and 1.5 times the microsphere diameter, the defect line appears in a form of the Saturn ring, as shown in Figure 2.

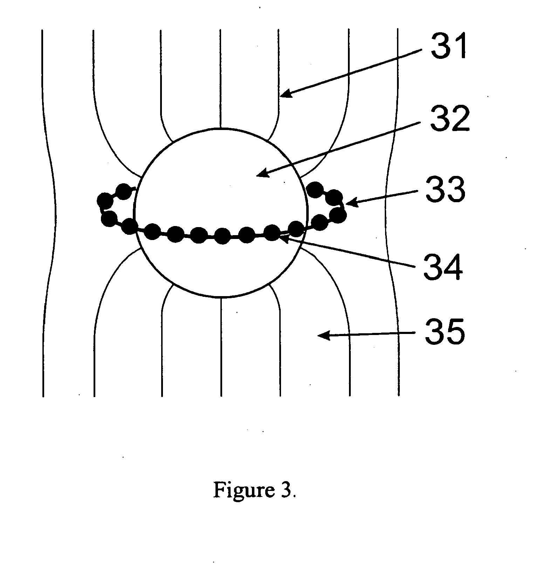

Figure 3 shows the lines of ordering 31 of the nematic liquid crystal 35, around the defect line 33 in a form of the Saturn ring, encircling the colloidal particle 32. The lines of ordering, 31, describe the average director of the local ordering of the nematic liquid crystal. In the core of the defect line, the order is not defined, whereas the orientational order is described using the order parameter $S = \frac{1}{2}(3\langle \cos^2 \theta \rangle - 1)$, where $\theta$ defines the angle of the deviation of a liquid crystal molecule from the average direction. The brackets indicate the time-averaged value. The order parameter describes the degree of ordering of the nematic liquid crystal and may vary from place to place inside the nematic liquid crystal, which implies not only the degree of order, but also local direction of the average order. Figure 3 also presents the distribution of nanoparticles 34 in the vicinity of the colloidal particle 32, encircled with the Saturn ring 33. In time average, the nanoparticles fill-up the core of the defect, but they also experience large fluctuations due to their Brownian motion around the core of the defect. A typical size of the nanoparticles is 100 nanometers. Their shape may be different and is not essential for the formation of metamaterials. It is their surface properties and material properties, which are important for the production of metamaterials. These important material properties include good transport of electric charge in nanoparticles. Good transport of electric charge gives rise to induction currents in rings formed of nanoparticles, which in turn creates internal magnetic field and inductive response of the rings. Good transport of electric charge means large displacement of electric charge under the electric force, generated by external electric and magnetic fields (via induction), that form the electromagnetic wave of the incident radiation.

The surface of nanoparticles must be such as to strongly influence the degree of order, which means strong interaction with liquid crystalline molecules. Therefore, the nanoparticles are selected to have anchoring energies with the liquid crystalline molecules preferably in the range of $10^{-4}$ to $10^{-3}$ $J/m^2$. Due to the interaction, the nanoparticle will be a generator of local disorder because of its curved surface, meaning the order parameter S will be smaller in the vicinity of the nanoparticle compared to regions without nanoparticles. The nanoparticles may be made of different materials, such as good electric conductors (Au, Pt, Ag, Cu, indium-tin oxide), semiconductors (Si, Ge,...) or electric insulators. Nanoparticles may be of materials exhibiting magnetic properties, such as ferromagnetism, superparamagnetism, or diamagnetism. The nanoparticles may have special dielectric properties, such as high dielectric constant, or dispersion of the dielectric constant in a given frequency range. Nanoparticles may be made of ferroelectric relaxor materials, meaning they show extremely large electromechanical response under the influence of the external electric field. The nanoparticles may have special optical properties, such as strong absorption of EM waves, fluorescence, and optical activity.

When different nanoparticle materials are used for the formation of dispersion, a synthetic material is obtained, where the colloidal particles in the nematic crystal are encircled with defect lines, filled-up with nanoparticles. This can be obtained using the procedure, described in the following.

A solution of nanoparticles is prepared, using an appropriate solvent (isopropanol, toluene, ether,...), with nanoparticle concentrations from several to several tens of percents. As an example, a 25% of tin-oxide nanoparticles in the isopropanol alcohol could be used ("Sigma Aldrich nonaqueous dispersions of nanoparticles"). The solution is mixed with the prepared dispersion of colloidal particles in the nematic liquid crystal in the concentration range from 0.01% to 90% and mixed using ultrasound. The composite dispersion is then exposed to reduced external pressure, thus removing the solvent. The degree of residual solvent is checked by measuring the temperature of the isotropic-nematic phase transition, which is very sensitive to impurities in the liquid crystal. The prepared composite dispersion of colloidal particles, nanoparticles and the nematic liquid crystal may be heated into the isotropic phase and cooled back, in order to improve the distribution of the material.

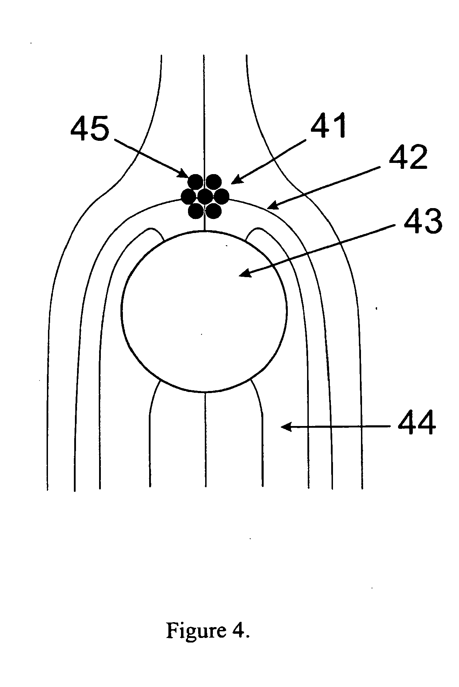

The second example of a synthetic material (metamaterial) is shown in Figure 4, where local distribution of nanoparticles 45 in the vicinity of a point defect 41, that appears spontaneously close to the colloidal particle 43 with strong surface anchoring of a liquid crystal 44. The local orientation of the liquid crystal is shown using the lines 42.

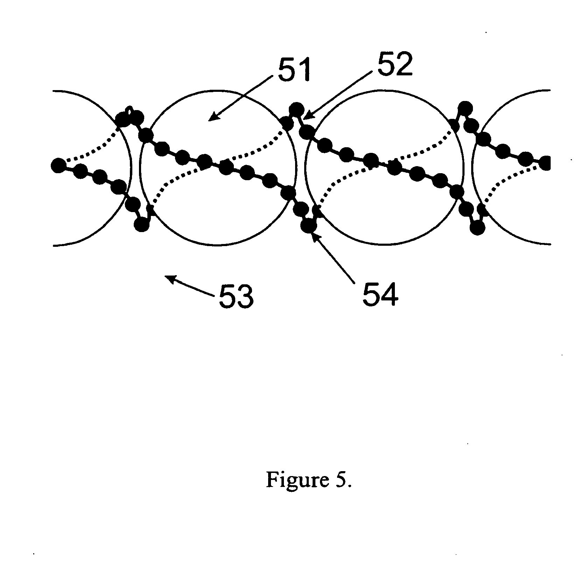

The third example of the synthetic material is shown in Figure 5, where nanoparticles 54 are segregated in the vicinity of topological defects 52, which are not localized at a particular colloidal particle 51, but are distributed over several colloidal particles and therefore entangle colloidal particles, immersed in the liquid crystal 53. Such defect lines can be obtained by rapidly heating and the cooling liquid crystal around several colloidal particles, which are in close contact. In this case the dispersion of colloidal particles and nanoparticles in the liquid crystal has to be heated into the isotropic phase and then rapidly cooled down (i.e. quenched) into the nematic phase. Typical cooling rate of 1K per second have to be used, which can easily be obtained by putting dispersion in good thermal contact with a cold body with large heat capacity.

The invention uses the self-assembly of particles in a liquid crystal, which may result in spontaneous growth of metamaterials at proper conditions. The spontaneous growth of metamaterials from dispersions of colloidal particles and nanoparticles in a nematic liquid crystal is based on entropic and structural forces, which act between particles in the liquid crystal.

While the invention has been illustrated and described in detail in the drawings and foregoing description, such illustration and description are to be considered illustrative or exemplary and not restrictive; the invention is not limited to the disclosed embodiments. The different embodiments described above and in the claims can also be combined.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of these claims.

## Claims

1. Metamaterial and/or resonant material formed of a dispersion of colloidal particles (12) and nanoparticles (11) in liquid crystal (14), the colloidal particles (12) being randomly or regularly distributed in the liquid crystal (14) and causing topological defects (13) in the liquid crystal (14), **characterised in that** the nanoparticles (11) are smaller in size than the colloidal particles (12) and are localized in the region of said topological defects (13) in the liquid crystal (14).

2. Metamaterial and/or resonant material according to claim 1, wherein the nanoparticles (11) are smaller in size than the diameter of the topological defects (13).

3. Metamaterial and/or resonant material according to claim 1 or 2, wherein said defects (13) have the shape of closed lines, localized in the vicinity of the colloidal particles (12).

4. Metamaterial and/or resonant material according to claim 1 or 2, wherein said defects (13) have the shape of points, which are delocalized close to the colloidal particles (12).

5. Metamaterial and/or resonant material according to claim 1 or 2, wherein said defects (13) have the shape of closed and delocalized lines, entangling two or many colloidal particles (12).

6. Metamaterial and/or resonant material according to claim 1 or 2, wherein said defects (13) have the shape of open and delocalized lines of certain length, ending at both ends with a point topological defect or colloidal particles.

7. Metamaterial and/or resonant material according to any of claims 1 6, wherein the nanoparticles (11) comprise nanoparticles made of electrically conductive material and/or nanoparticles made of electrically semiconducting material and/or nanoparticles made of electrically insulating material.

8. Metamaterial and/or resonant material according to any of claims 1 to 6, wherein the nanoparticles (11) are made of ferromagnetic material and/or paramagnetic material and/or superparamagnetic material and/or diamagnetic material.

9. Metamaterial and/or resonant material according to any of claims 1 to 6, wherein the nanoparticles (11) are made of ferroelectric material or of ferroelectric relaxor material.

10. Metamaterial and/or resonant material according to any of claims 1 to 6, wherein the nanoparticles (11) are made of an optically active material and/or of a fluorescent material.

11. Mctamaterial and/or resonant material according to any of claims 1 to 10, wherein the nanoparticles (11) are selected to have a strong interaction with liquid crystalline molecules of the liquid crystal (14), in particular to have anchoring energies with the liquid crystalline molecules in the range of $10^{-4}$ to $10^{-3}$ J/m$^2$.

12. A method of producing a metamaterial and/or resonant material as defined in one of claims 1 to 11, comprising at least the following steps:

- preparing a dispersion of colloidal particles (12) in a nematic liquid crystal (14), in which dispersion said colloidal particles (12) cause topological defects (13) in the liquid crystal (14), and
- adding nanoparticles (11) which are smaller in size than the colloidal particles (12) to the liquid crystal (14) prior to the preparation of the dispersion or to the dispersion during or after the preparation of the dispersion, the nanoparticles (11) being selected to localize in the region of said topological defects (13) in the liquid crystal (14).

13. The method according to claim 12, wherein the preparation of the dispersion includes the following steps:

- chemically treating the colloidal particles (12) using a surfactant,
- flushing the chemically treated colloidal particles (12) and drying,
- adding the dried colloidal particles (12) to the liquid crystal (14), heating the resulting dispersion into the isotropic phase and stirring the dispersion by sonification, and
- cooling down the dispersion into the nematic phase.

14. The method according to claim 13, wherein the step of chemically treating the colloidal particles (12) using a surfactant comprises:

- immersing the colloidal particles (12) for five minutes into a 1% solution of N,N-dimethyl-N-octadecyl-3-aminopropyl trimethoxysilyl chloride (DMOAP).

15. The method according to any of claims 12 to 14, wherein for adding the nanoparticles to the dispersion

- a suspension of nanoparticles (11) is prepared in a suitable solvent, the concentrations of nanoparticles (11) being typically from several percents to several tens of percents,
- the suspension of nanoparticles (11) is mixed into the liquid crystal colloidal dispersion in the concentration range from 0.01% to 99%, and
- the resulting dispersion of nanoparticles (11) and colloidal particles (12) is stirred using ultrasound, exposed to reduced pressure in order to remove the solvent, heated into the isotropic phase and subsequently cooled down.

**Patentansprüche**

1. Metamaterial und/oder Resonanzmaterial, welches aus einer Dispersion von kolloidalen Teilchen (12) und Nanoteilchen (11) in einem Flüssigkristall (14) gebildet wird, wobei die kolloidalen Teilchen (12) statistisch oder regelmäßig in dem Flüssigkristall (14) verteilt sind und topologische Defekte (13) in dem Flüssigkristall (14) verursachen, **dadurch gekennzeichnet, dass** die Nanoteilchen (11) kleiner sind als die kolloidalen Teilchen (12) und in dem Bereich der topologischen Defekte (13) in dem Flüssigkristall (14) angeordnet sind.

2. Metamaterial und/oder Resonanzmaterial nach Anspruch 1, wobei die Nanoteilchen (11) kleiner sind als der Durchmesser der topologischen Defekte (13).

3. Metamaterial und/oder Resonanzmaterial nach Anspruch 1 oder 2, wobei die die Defekte (13) die Form geschlossener Linien aufweisen, die in Nachbarschaft der kolloidalen Teilchen (12) angeordnet sind.

4. Metamaterial und/oder Resonanzmaterial nach Anspruch 1 oder 2, wobei die Defekte (13) die Form von Punkten aufweisen, welche in der Nähe der kolloidalen Teilchen (12) delokalisiert sind.

5. Metamaterial und/oder Resonanzmaterial nach Anspruch 1 oder 2, wobei die Defekte (13) die Form von geschlossenen und delokalisierten Linien aufweisen, welche mit zwei oder mehr kolloidalen Teilchen (12) verheddert sind.

6. Metamaterial und/oder Resonanzmaterial nach Anspruch 1 oder 2, wobei die Defekte (13) die Form von offenen und delokalisierten Linien bestimmter Länge aufweisen, welche an beiden Enden mit einem punkttopologischen Defekt oder kolloidalen Teilchen abschließen.

7. Metamaterial und/oder Resonanzmaterial nach einem der Ansprüche 1 bis 6, wobei die Nanoteilchen (11) Nanoteilchen, welche aus elektrisch leitendem Material hergestellt sind, und/oder Nanoteilchen, welche aus elektrisch halbleitendem Material hergestellt sind, und/oder Nanoteilchen umfassen, welche aus elektrisch isolierendem Material hergestellt sind.

8. Metamaterial und/oder Resonanzmaterial nach einem der Ansprüche 1 bis 6, wobei die Nanoteilchen (11) aus ferromagnetischem Material und/oder paramagnetischem Material und/oder superparamagnetischem Material und/oder diamagnetischem Material hergestellt sind.

9. Metamaterial und/oder Resonanzmaterial nach einem der Ansprüche 1 bis 6, wobei die Nanoteilchen (11) aus ferroelektrischem Material oder ferroelektrischem Relaxormaterial hergestellt sind.

10. Metamaterial und/oder Resonanzmaterial nach einem der Ansprüche 1 bis 6, wobei die Nanoteilchen (11) aus einem optisch aktiven Material und/oder einem fluoreszierenden Material hergestellt sind.

11. Metamaterial und/oder Resonanzmaterial nach einem der Ansprüche 1 bis 10, wobei die Nanoteilchen (11) so ausgewählt sind, dass sie eine starke Wechselwirkung mit flüssigkristallinen Molekülen des Flüssigkristalls (14) aufweisen, insbesondere Verankerungsenergien an den flüssigkristallinen Molekülen im Bereich von $10^{-4}$ bis $10^{-3}$ $J/m^2$ aufweisen.

12. Verfahren zur Herstellung eines Metamaterials und/oder Resonanzmaterials nach einem der Ansprüche 1 bis 11, welches zumindest die folgenden Schritte umfasst:

    - Herstellen einer Dispersion kolloidaler Teilchen (12) in einem nematischen Flüssigkristall (14), in welcher die kolloidalen Teilchen (12) topologische Defekte (13) in dem Flüssigkristall (14) verursachen, und
    - Zugeben von Nanoteilchen (11), welche kleiner sind als die kolloidalen Teilchen (12), zu dem Flüssigkristall (14) vor der Herstellung der Dispersion oder zu der Dispersion während oder nach der Herstellung der Dispersion, wobei die Nanoteilchen (11) so ausgewählt werden, dass sie sich in dem Bereich der topologischen Defekte (13) in dem Flüssigkristall (14) anordnen.

13. Verfahren nach Anspruch 12, wobei die Herstellung der Dispersion die folgenden Schritte umfasst:

    - chemisches Behandeln der kolloidalen Teilchen (12) unter Verwendung einer oberflächenaktiven Substanz,
    - Spülen der chemisch behandelten kolloidalen Teilchen (12) und Trocknen,
    - Zugeben der getrockneten kolloidalen Teilchen (12) zu dem Flüssigkristall (14), Erwärmen der resultierenden Dispersion in die isotrope Phase und Rühren der Dispersion durch Beschallung und
    - Abkühlen der Dispersion in die nematische Phase.

14. Verfahren nach Anspruch 13, wobei der Schritt des chemischen Behandelns der kolloidalen Teilchen (12) unter Verwendung einer oberflächenaktiven Substanz das Folgende umfasst:

    - Tauchen der kolloidalen Teilchen (12) in eine 1%ige Lösung von N,N-Dimethyl-N-octadecyl-3-aminopropyltrimethoxysilylchlorid (DMOAP) für fünf Minuten.

15. Verfahren nach einem der Ansprüche 12 bis 14, wobei für die Zugabe der Nanoteilchen zu der Dispersion

    - eine Suspension der Nanoteilchen (11) in einem geeigneten Lösungsmittel hergestellt wird, wobei die Konzentrationen der Nanoteilchen (11) typischerweise mehrere Prozent bis mehrere zehn Prozent betragen,
    - die Suspension der Nanoteilchen (11) in einem Konzentrationsbereich von 0,01 % bis 99 % in die kolloidale Flüssigkristalldispersion eingemischt wird und
    - die resultierende Dispersion der Nanoteilchen (11) und der kolloidalen Teilchen (12) unter Anwendung von Ultraschall gerührt wird, reduziertem Druck ausgesetzt wird, um das Lösungsmittel zu entfernen, in die isotrope Phase erwärmt und anschließend abgekühlt wird.

**Revendications**

1. Métamatériau et/ou matériau résonant formé par une dispersion de particules colloïdales (12) et de nanoparticules (11) dans un cristal liquide (14), les particules colloïdales (12) étant distribuées de manière aléatoire ou régulière dans le cristal liquide (14) et entraînant des défauts topologiques (13) dans le cristal liquide (14), **caractérisés en ce que** les nanoparticules (11) ont une taille inférieure à celle des particules colloïdales (12) et sont localisées dans la région desdits défauts topologiques (13) dans le cristal liquide (14).

2. Métamatériau et/ou matériau résonant selon la revendication 1, les nanoparticules (11) ayant une taille inférieure au diamètre des défauts topologiques (13).

3. Métamatériau et/ou matériau résonant selon la revendication 1 ou 2, lesdits défauts (13) ayant la forme de lignes fermées, localisées à proximité des particules colloïdales (12).

4. Métamatériau et/ou matériau résonant selon la revendication 1 ou 2, lesdits défauts (13) ayant la forme de points, qui sont délocalisés à proximité des particules colloïdales (12).

5. Métamatériau et/ou matériau résonant selon la revendication 1 ou 2, lesdits défauts (13) ayant la forme de lignes fermées et délocalisées, impliquant deux particules colloïdales (12) ou plus.

6. Métamatériau et/ou matériau résonant selon la revendication 1 ou 2, lesdits défauts (13) ayant la forme de lignes ouvertes et délocalisées d'une certaine longueur, se terminant aux deux extrémités par un défaut topologique ponctuel ou des particules colloïdales.

7. Métamatériau et/ou matériau résonant selon l'une quelconque des revendications 1 à 6, les nanoparticules (11) comprenant des nanoparticules formées par un matériau électroconducteur et/ou des nanoparticules formées par un matériau électriquement semi-conducteur et/ou des nanoparticules formées par un matériau électriquement isolant.

8. Métamatériau et/ou matériau résonant selon l'une quelconque des revendications 1 à 6, les nanoparticules (11) étant formées par un matériau ferromagnétique et/ou un matériau paramagnétique et/ou un matériau superparamagnétique et/ou un matériau diamagnétique.

9. Métamatériau et/ou matériau résonant selon l'une quelconque des revendications 1 à 6, les nanoparticules (11) étant formées par un matériau ferroélectrique ou par un matériau relaxeur ferroélectrique.

10. Métamatériau et/ou matériau résonant selon l'une quelconque des revendications 1 à 6, les nanoparticules (11) étant formées par un matériau optiquement actif et/ou un matériau fluorescent.

11. Métamatériau et/ou matériau résonant selon l'une quelconque des revendications 1 à 10, les nanoparticules (11) étant choisies pour avoir une forte interaction avec les molécules cristallines liquides du cristal liquide (14), en particulier pour avoir des énergies d'ancrage avec les molécules cristallines liquides dans la plage de $10^{-4}$ à $10^{-3}$ J/m$^2$.

12. Procédé de production d'un métamatériau et/ou d'un matériau résonant tel que défini dans l'une quelconque des revendications 1 à 11, comprenant au moins les étapes suivantes :

- préparation d'une dispersion de particules colloïdales (12) dans un cristal liquide nématique (14), dans laquelle dispersion lesdites particules colloïdales (12) entraînent des défauts topologiques (13) dans le cristal liquide (14), et,
- ajout de nanoparticules (11) qui sont d'une taille inférieure à la taille des particules colloïdales (12) au cristal liquide (14) avant la préparation de la dispersion ou à la dispersion durant ou après la préparation de la dispersion, les nanoparticules (11) étant choisies pour se localiser dans la région desdits défauts topologiques (13) dans le cristal liquide (14).

13. Procédé selon la revendication 12, la préparation de la dispersion comprenant les étapes suivantes :

- traitement chimique des particules colloïdales (12) en utilisant un surfactant,
- rinçage des particules colloïdales chimiques traitées (12) et séchage,
- ajout des particules colloïdales sèches (12) au cristal liquide (14), chauffage de la dispersion résultante en phase isotrope et agitation de la dispersion par sonification, et,
- refroidissement de la dispersion en phase nématique.

14. Procédé selon la revendication 13, l'étape consistant à chimiquement traiter les particules (12) en utilisant un surfactant comprenant :

- l'immersion des particules colloïdales (12) pendant 5 minutes dans une solution à 1 % de chlorure de N,N-diméthyl-N-octadécyl-3-aminopropyl triméthoxysilyle (DMOAP).

15. Procédé selon l'une quelconque des revendications 12 à 14, dans lequel pour ajouter les nanoparticules à la dispersion

- une suspension de nanoparticules (11) est préparée dans un solvant adapté, les concentrations des nanoparticules (11) étant typiquement de plusieurs pourcents à plusieurs dizaines de pourcents,
- la suspension de nanoparticules (11) est mélangée dans la dispersion colloïdale cristalline liquide dans la plage de concentrations de 0,01 % à 99 %, et,
- la dispersion obtenue de nanoparticules (11) et de particules colloïdales (12) est agitée en utilisant des ultrasons, exposée à une pression réduite de manière à éliminer le solvant, chauffée en phase isotrope puis refroidie.

Figure 1.

Figure 2.

Figure 3.

Figure 4.

Figure 5.

## REFERENCES CITED IN THE DESCRIPTION

### Patent documents cited in the description

- US 2004066251 A
- WO 2006015478 A
- EP 1671164 A
- WO 2006023195 A
- WO 03087904 A

### Non-patent literature cited in the description

- **VICTOR VESELAGO.** *Sov. Phys. Usp,* 1967, vol. 10, 509
- **J. B. PENDRY.** *Phys. Rev. Lett.,* 2000, vol. 85, 3966
- **J. B. PENDRY ; A. J. HOLDEN ; D. J. ROBBINS ; W. J. STEWART.** *IEEE Trans. Microwave Theory Tech.,* 1999, vol. 47, 2075
- **D. R. SMITH ; W. J. PADILLA ; D. C. VIER ; S. C. NEMAT-NASSER ; S. SCHULTZ.** *Phys. Rev. Lett.,* 2000, vol. 84, 4184
- **R. A. SHELBY ; D. R. SMITH ; S. SCHULTZ.** *Science,* 2001, vol. 292, 77
- **S. A. RAMAKRISHNA.** *Rep. Prog. Phys.,* 2005, vol. 68, 449
- **S. LINDEN ; CH. ENKRICH ; M. WEGENER ; J. ZHOU ; TH. KOSCHNY ; C. M. SOUKOULIS.** *Science,* 2004, vol. 306, 1351
- **J. B. PENDRY.** *Science,* 2004, vol. 306, 1353
- **G. DOLLING ; CH. ENKRICH ; M. WEGENER ; C. M. SOUKOULIS ; S. LINDEN.** *Science,* 2006, vol. 312, 892
- **I. Musevic et al.** Two-Dimensional Nematic Colloidal Crystals Self-Assembled by Topological Defects. *Science,* 18 August 2006, vol. 313, 954-958